# FASCICULE DE BREVET EUROPEEN

(11) **EP 3 204 626 B1**
(45) Date de publication et mention de la délivrance du brevet: **12.09.2018**
(21) Numéro de dépôt: 15791688.3
(22) Date de dépôt: 06.10.2015
(51) Int. Cl.: F02C 7/32, F16H 1/14

(54) **TRANSMISSION SPINALE COMPACTE**
KOMPAKTE SPINALE ÜBERTRAGUNG
COMPACT SPINAL TRANSMISSION

(30) Priorité: 07.10.2014 FR 1459606
(43) Date de publication de la demande: 16.08.2017
(73) Titulaire: Safran Transmission Systems, 92700 Colombes (FR)
(72) Inventeur: GUILLEMONT, Maxence, F-92700 Colombes (FR); BAUDUIN, Lionel, F-78800 Houilles (FR); BECQUERELLE, Samuel Raymond Germain, F-78180 Montigny Le Bretonneux (FR); VIEL, Julien, F-95100 Argenteuil (FR)
(74) Mandataire: Regimbeau
(86) Numéro de dépôt international: PCT/FR2015/052678
(87) Numéro de publication internationale: WO 2016/055727

(56) Documents cités:
- EP-A1- 2 522 832
- EP-A1- 2 530 282
- EP-A2- 1 980 732
- WO-A2-2014/130239

## Description

La présente invention concerne le domaine des turbomachines. Elle vise en particulier le montage d'équipements auxiliaires et la transmission mécanique de puissance entre un arbre du moteur, dans une turbomachine, et ces équipements à l'aide d'un boîtier d'entraînement des accessoires (AGB pour « Accessory GearBox », en anglais), ou de boîtes de transfert (TGB pour « Transfert GearBox »).
En d'autres termes, l'invention concerne les architectures de transmission de puissance permettant d'alimenter les équipements dits auxiliaire d'un appareil à partir de la puissance produite par le groupe propulsif, ainsi que de supporter ces équipements.

### ETAT DE L'ART

Le boîtier d'entraînement des accessoires supporte différents équipements auxiliaires, ou accessoires, montés sur le moteur et nécessaires à son fonctionnement ou à celui de l'aéronef. Ces divers accessoires peuvent notamment comprendre un générateur, un démarreur, un alternateur, des pompes hydrauliques à carburant ou à huile, des groupes de lubrification multi-étages, etc. et sont entraînés mécaniquement par l'arbre du moteur par l'intermédiaire d'arbres de transmission. La puissance nécessaire à l'entraînement des accessoires est généralement prélevée mécaniquement au niveau du compresseur de la turbomachine.
L'AGB est adapté pour être implémentée sur un aéronef comprenant un groupe propulsif permettant la mise en mouvement dudit aéronef. Le groupe propulsif est généralement un turbopropulseur ou un turboréacteur.

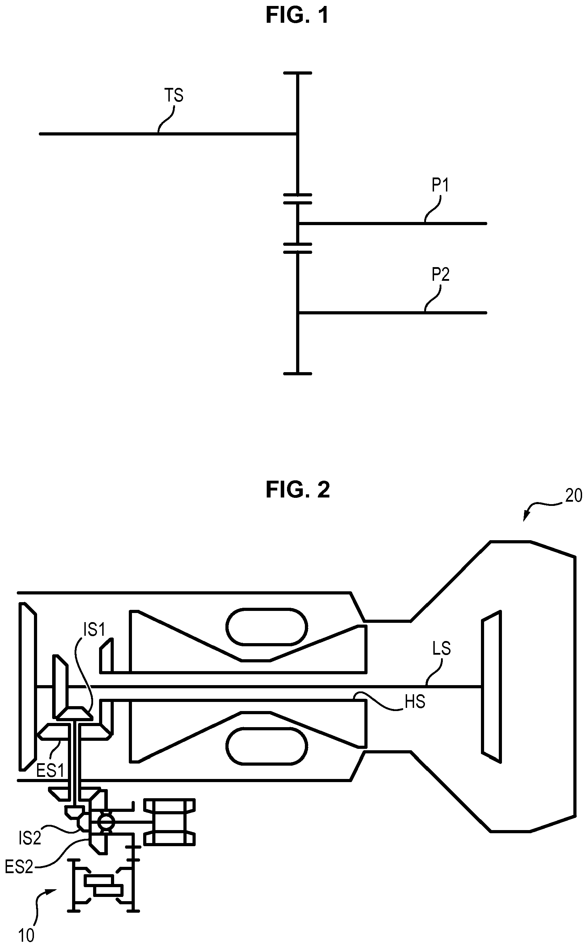

Il existe actuellement des cascades de pignons droits P1, P2, ..., issu d'un arbre de transfert TS prélevant de la puissance depuis le groupe propulsif, chaque pignon offrant une vitesse de sortie différente (voir **figure 1**).
Une telle solution n'offre pas ni la compacité requise pour intégrer l'AGB ni les rapports de réduction nécessaire pour les équipements (la plage de vitesse s'étend généralement de 6000 à 24000 tr/min).

En outre, il existe certains types d'équipements nécessitant chacun plusieurs vitesses d'entrée différentes. Par exemple, la pompe à carburant possède deux étages de pompes qui chacun ont des rendements optimisés à différentes vitesses de rotations. Par conséquent, imposer une même vitesse aux deux étages réduit les performances de la pompe et augmente l'encombrement du système. Une sortie bi-vitesse de l'AGB permettrait ainsi de réduire la taille des équipements.
Le document US 2013/0247539 décrit un AGB 10 possédant deux vitesses de sortie (voir **figure 2**). Un groupe propulsif 20, comprenant un arbre propulsif basse vitesse BS et un arbre propulsif haute vitesse HS, alimente via des pignons coniques une double chaîne cinématique composée d'arbres de transmission concentriques sur tout l'AGB 10. En effet, un premier arbre externe ES1 est entrainé par l'arbre haute vitesse HS et un premier arbre interne IS est entrainé par l'arbre basse vitesse LS. Par la suite, le premier arbre externe ES1, respectivement interne IS1, entraine un second arbre externe ES2, respectivement interne IS2, de façon à réorienter la transmission selon les axes d'entrée des équipements.
Comme mentionné précédemment, les premiers arbres externes ES1 et internes IS1 - respectivement seconds ES2, IS2- sont concentriques et tournent chacun à des vitesses différentes. De cette façon, l'AGB 10 transmet effectivement deux vitesses de rotations pour alimenter les équipements.
Une telle architecture est lourde en termes de conception et de durée de vie (maintien des alignements, duplication de la chaine cinématique de transmission donc multiplicité des pièces, contraintes mécaniques, etc.). De plus, elle nécessite une adaptation au niveau du groupe propulsif 20, ce qui limite son intégrabilité aux groupes 20 déjà existant.
Le document WO 2014/130239 décrit une autre architecture où un arbre supplémentaire est ajouté, pour distribuer la rotation vers différents équipements.

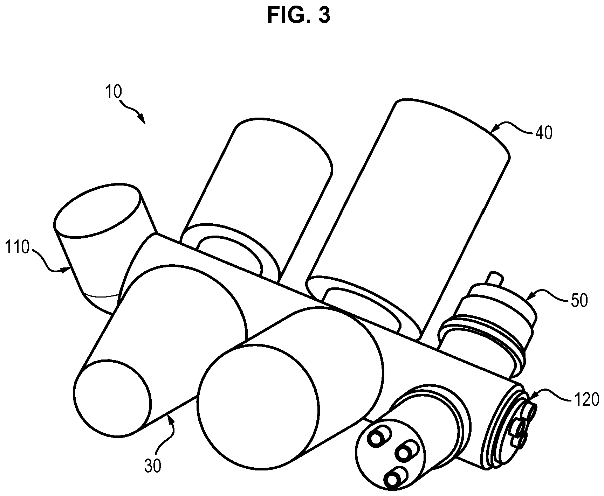

Par conséquent, il n'existe pas de solution pleinement satisfaisante en termes de compacité. En outre, il n'existe pas non plus de solution pleinement satisfaisante dans le cas d'une alimentation des équipements en plusieurs vitesses avec un encombrement réduit. De plus, les solutions pouvant être implémentées sur les aéronefs sans modification substantielle du groupe propulsif ou des équipements sont préférables. En outre, une direction de la conception des AGB 10 est orientée vers les AGB de type « core », comme illustré sur la **figure 3****,** exigeant en termes de compacité pour localiser l'AGB 10 et les équipements 30, 40, 50, ....

### PRESENTATION DE L'INVENTION

Pour cela, l'invention propose un ensemble comprenant un boîtier d'entrainement d'un aéronef et un équipement, ledit boitier étant adapté pour transmettre la puissance d'un groupe propulsif de l'aéronef à l'équipement, le boitier comprenant :
∘ Un arbre de liaison, adapté pour être entrainé par le groupe propulsif,
∘ Un arbre principal, adapté pour être entrainé par l'arbre de liaison,
∘ Deux roues coniques solidaires de l'arbre principal, lesdites roues ayant des diamètres différents,
l'équipement comprenant :
∘ un arbre d'équipement haute vitesse comprenant une roue conique,
∘ un arbre d'équipement basse vitesse, comprenant une roue conique,
caractérisé en ce que chaque roue des arbres d'équipement est engrenée respectivement par une des deux roues coniques de l'arbre principal, de sorte que les deux arbres d'équipement tournent à des vitesses différentes l'une par rapport à l'autre.
De cette façon, l'architecture proposée est compacte, grâce à une division en aval de la chaine cinématique de la transmission en deux rotations de vitesses différentes. De plus, elle permet d'alimenter un équipement nécessitant deux vitesses d'entrée.
L'invention comprend aussi les caractéristiques suivantes, prises seules ou en combinaison :
- les roues coniques sont placées en vis-à-vis, de sorte que l'entrainement des deux arbres d'équipement se fasse en sens contraire,
- l'arbre de liaison est en biais par rapport à l'arbre principal,
- l'équipement est une pompe à carburant multi-étages,
- l'équipement est un groupe de lubrification multi-étages.
L'invention propose aussi un système comprenant un ensemble tel que précédemment décrit, comprenant en outre un groupe propulsif, ledit groupe propulsif entrainant l'arbre de liaison. En outre, les ensembles ou systèmes tels que précédemment décrits, peuvent comprendre au moins deux équipements, les deux équipements étant entrainés par des mêmes roues coniques du boitier.
En outre, les ensembles ou systèmes tels que précédemment décrits, ont au moins une roue conique qui est une roue spiro-conique.
L'invention propose aussi un aéronef comprenant un système selon la présentation précédente, dans lequel le groupe propulsif est un turbopropulseur.
D'une façon indépendante et non revendiquée, à titre d'illustration, la présente description propose aussi un ensemble comprenant un boîtier d'entrainement d'un aéronef et un équipement, ledit boitier étant adapté pour transmettre la puissance d'un groupe propulsif à l'équipement,
le boitier comprenant :
∘ Un arbre de liaison, adapté pour être entrainé par le groupe propulsif,
∘ Un arbre principal, adapté pour être entrainé par l'arbre de liaison,
∘ Une roue conique solidaire de l'arbre principal,
l'équipement comprenant :
∘ un arbre d'équipement haute vitesse,
∘ un arbre d'équipement basse vitesse,
caractérisé en ce qu'un train épicycloïdal comprenant un axe d'entrée et un axe de sortie est disposé entre l'arbre principal et l'équipement, l'axe d'entrée comprenant une roue conique reliée à la roue conique de l'arbre principal et étant solidaire en rotation avec un des deux arbres d'équipement et l'axe de sortie étant solidaire en rotation avec l'autre arbre d'équipement, de sorte que les deux arbres d'entrainement ont des vitesses de rotation différentes.
D'une façon indépendante et non revendiquée, à titre d'illustration, la présente description propose aussi un boitier d'entraînement des équipements d'un aéronef adapté pour transmettre la puissance d'un groupe propulsif à au moins un équipement, le boitier de transmission comprenant :
∘ Un arbre de liaison, adapté pour être entrainé par le groupe propulsif, comprenant une roue conique,
∘ Un arbre principal, comprenant :
   ▪ un organe de réception sous forme d'une première roue conique, adaptée pour être entrainée par la roue conique de l'arbre de liaison, et
   ▪ une deuxième roue conique, adapté pour entrainer un équipement,
∘ Un arbre secondaire, monté coaxialement sur l'arbre principal et indépendant en rotation, comprenant :
   ▪ Une première roue conique, adaptée pour être entrainée par la roue conique de l'arbre de liaison, et
   ▪ un deuxième roue conique, adaptée pour entrainer un autre équipement,
dans lequel l'axe de l'arbre de liaison et l'axe de l'arbre principal sont concourants et forment un angle non droit, et la roue conique de l'arbre principal et la roue conique de l'arbre secondaire, toutes deux adaptées pour être entrainées par la roue conique de l'arbre de liaison, sont de géométrie différente, de sorte que les vitesses de rotation de l'arbre principal et de l'arbre secondaire sont différentes.

L'invention propose aussi un ensemble comprenant un boîtier tel que précédemment décrit, comprenant en outre un équipement comprenant un arbre d'équipement haute vitesse et un arbre d'équipement basse vitesse, caractérisé en ce que les deux arbres sont coaxiaux et en ce que les deux arbres comprennent chacun une roue conique, dans lequel :
∘ une des deux roues est entrainée par la deuxième roue conique de l'arbre secondaire et,
∘ l'autre roue est entrainée par la deuxième roue conique de l'arbre principal,
de sorte que les deux arbres d'équipement tournent à des vitesses différentes.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 et 2 représentent des AGB conformes à l'art antérieur,
- La figure 3 représente une vue 3D d'un AGB conforme à l'invention,
- La figure 4 représente un schéma d'une architecture d'AGB conforme à un premier mode de réalisation,
- La figure 5 représente un schéma de faisabilité géométrique,
- Les figures 6 et 7 représentent un second mode de réalisation, non revendiqué et donné à titre illustratif,
- Les figures 8 et 9 représentent un troisième mode de réalisation, non revendiqué et donné à titre illustratif,
- La figure 10 représente plusieurs équipements entrainés par une seule roue conique,
- La figure 11 représente le premier et le troisième de réalisation intégrés sur un même AGB.

### DESCRIPTION DETAILLEE

### 1^{er} mode de réalisation

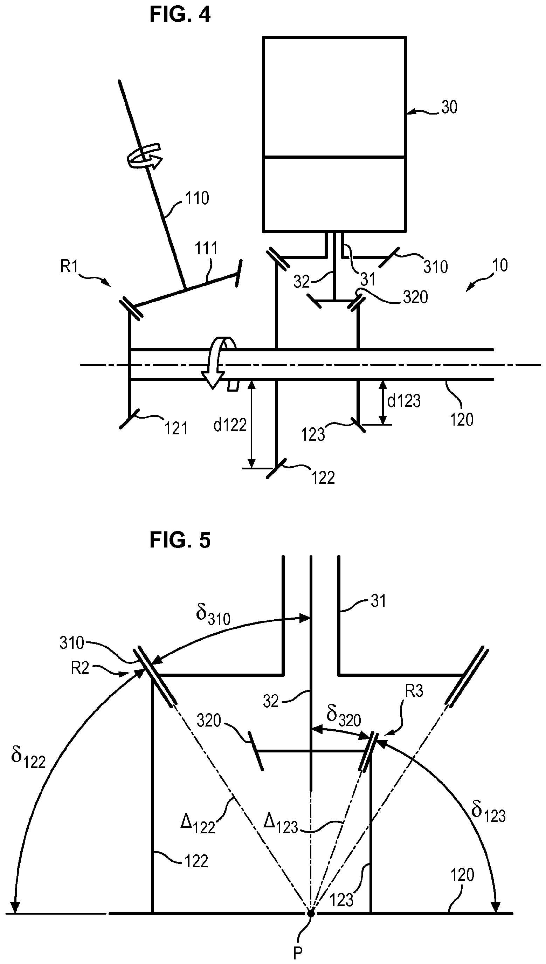

En référence aux **figures 3** **et** **4****,** l'AGB 10 comprend tout d'abord:
- un arbre de liaison 110 adapté pour être engrené par le groupe propulsif, ledit arbre de liaison 110 comprenant un organe d'engrènement d'attaque 111,
- un arbre principal 120, comprenant un organe d'engrènement de réception 121.
Les organes d'engrènement d'attaque 111 et de réception 121 forment un premier renvoi d'angle R1.

L'arbre principal 120, par sa rotation, transmet une puissance mécanique aux équipements 30, 40, ..., 60. Pour cela, l'arbre principal 120 comprend en outre une première roue conique 122 et une deuxième roue conique 123, solidaires de l'arbre principal 120. Par solidaire, on entend solidaire en rotation par vissage, soudage ou serrage. Les deux roues coniques 122, 123 possèdent des diamètres d₁₂₂, d₁₂₃ respectifs différents et des angles primitifs δ₁₂₂, δ₁₂₃ différents. L'angle primitif est défini par rapport l'arbre sur lequel la roue conique est montée (voir **figure 5**).
Les angles primitifs δ₁₂₂, δ₁₂₃ définissent des axes Δ₁₂₂, Δ₁₂₃ qui sont concourant en un point P.
La première roue conique 122 comprend Z₁₂₂ dents et la deuxième roue conique comprend Z₁₂₃ dents. On comprend bien que le nombre de dents est directement corrélé au diamètre de la roue.
Selon une première variante, les roues coniques 122, 123 sont placées en vis-à-vis, c'est-à-dire que le point P est situé entre les deux roues 122, 123 (voir **figure 4**) ou bien que les angles primitifs δ₁₂₂, δ₁₂₃ définis de façon orientée ont un signe contraire.
Selon une deuxième variante, les roues coniques 122, 123 sont placées en série, c'est-à-dire que le point P est situé à l'extérieur des deux roues 122, 123 (non représenté sur les figures) ou bien que les angles primitifs δ₁₂₂, δ₁₂₃ définis de façon orientée ont le même signe.

De cette façon, les roues coniques 122, 123 sont adaptées pour recevoir un équipement 30 nécessitant deux vitesses d'entrée. Pour cela, l'équipement 30 comprend un premier arbre d'équipement 31 et un deuxième arbre d'équipement 32, les deux arbres étant concentriques. Lorsque l'équipement 30 est mis en place sur l'AGB 10, l'axe défini par les deux arbres d'équipement passe par le point P défini précédemment. Le premier arbre d'équipement 31 comprend une roue conique 310, avec Z₃₁₀ dents, qui est engrainé par la première roue conique 122 de l'arbre principal 120. Lesdites deux roues coniques 122, 310 forment ainsi un deuxième renvoi d'angle R2.

Le deuxième arbre d'équipement 32 comprend une roue conique 320, avec Z₃₂₀ dents, qui est engrainé par la deuxième roue conique 123 de l'arbre principal 120. Lesdites deux roues coniques 123, 320 forment ainsi un troisième renvoi d'angle R3.
Afin que l'équipement 30 puisse être assemblé, il est naturellement nécessaire que les axes définis par les angles primitifs δ₃₁₀, δ₃₂₀ des roues coniques 310, 320 des arbres d'équipements 31, 32 se rejoignent audit point P.
De préférence, les arbres d'équipements 31, 32 sont orthogonaux à l'arbre principal 120 mais une telle condition n'est pas nécessaire.
La **figure 5** illustre la faisabilité géométrique de l'architecture ainsi que les vitesses de rotations des différents arbres.
On note ωᵢ la vitesse de rotation de la pièce i. On fixe d₁₂₂ > d₁₂₃ (et par conséquent Z₁₂₂ > Z₁₂₃) et, arbitrairement δ₁₂₂ < δ₁₂₃ avec δ₁₂₂ + δ₃₁₀ = δ₁₂₃ + δ₃₂₀ₐ = 90° (orthogonalité des arbres) ;
Ainsi, on a :
- ω₃₁ = Z₃₁₀/Z₁₂₂. ω₁₂₀ = tan (δ₁₂₂) ;
- ω₃₂ = Z₃₂₀/Z₁₂₃. ω₁₂₀ = tan (δ₁₂₃) ;
or δ₁₂₂ > δ₁₂₃, donc ω₃₁ > ω₃₂.
On obtient ainsi deux arbres d'équipement 31, 32 coaxiaux qui tournent à des vitesses différentes. Les vitesses des deux arbres 31, 32 sont ainsi indépendantes, c'est-à-dire qu'en choisissant des paramètres adaptés, les vitesses peuvent être ajustées indépendamment l'une de l'autre, même si les deux arbres d'équipement 31, 32 sont entraînés par le même arbre principal 120.
En effet, les rapports de réduction dépendent directement du nombre de dents des roues coniques 122, 123 de l'arbre principal 120 et des roues coniques 310, 320 de l'équipement 30.

### 2^{ème} mode de réalisation (non revendiqué et donné à titre illustratif)

La structure de l'AGB est similaire à celle du premier mode de réalisation, avec l'arbre de liaison 110 et l'arbre principal 120 avec le premier renvoi d'angle R1.
L'arbre principal 120 comprend une roue conique 124.
Un train épicycloïdal 13 est engrené par la roue conique 124. Le train épicycloïdal 13 comprend un planétaire d'entrée 131, un planétaire de sortie 132, au moins un satellite 133 et un porte-satellite 134. Le planétaire de sortie comprend aussi un axe de sortie 132a.

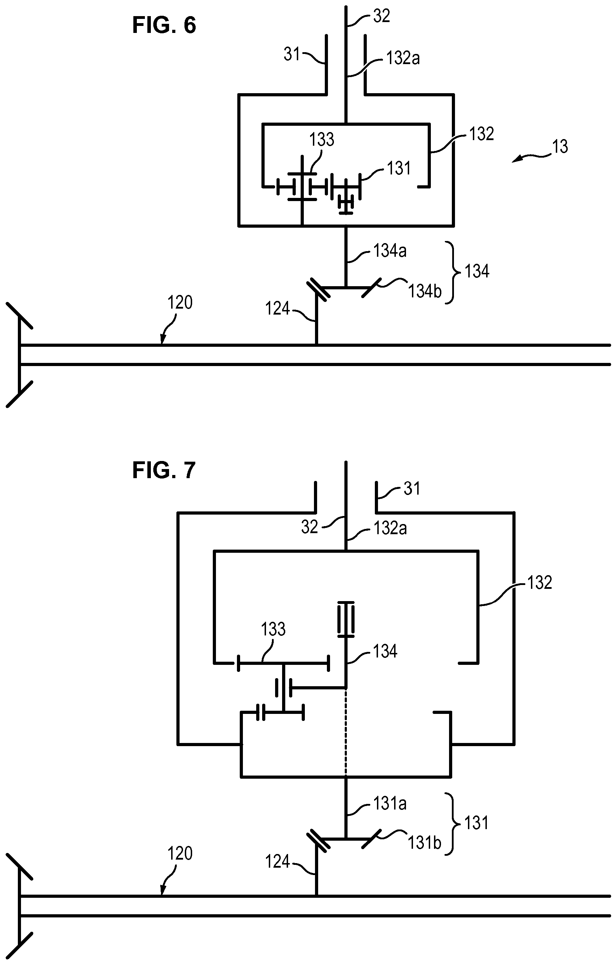

Selon une première alternative (voir **figure 6**), le porte-satellite 134 comprend un arbre 134a et une roue conique 134b qui est engrenée sur la roue conique 124 de l'arbre principal 120. Les arbres d'équipement 31, 32 sont solidaire en rotation respectivement du porte-satellite 134 et du planétaire de sortie 132 (ou inversement), qui sont eux-mêmes en rotation selon un même axe à des vitesses différentes.

Selon une deuxième alternative (voir **figure 7**), le planétaire d'entrée 131 comprend un arbre 131a et une roue conique 131b qui est engrenée sur la roue conique 124 de l'arbre principal 120. Les arbres d'équipement 31, 32 sont solidaire en rotation respectivement du planétaire d'entrée 131 et du planétaire de sortie 132 (ou inversement), qui sont eux-mêmes en rotation selon un même axe à des vitesses différentes.

Ces alternatives ne sont pas limitatives et sont adaptables sans difficulté par l'homme du métier aux différents types de trains épicycloïdaux. En effet, un train épicycloïdal est défini par trois valeurs de rotations angulaires (celles du planétaire d'entrée 131, de sortie 132, et du porte-satellite 133). Par conséquent, il existe une pluralité d'alternatives.

Plus généralement, on définit un arbre d'entrée 131a, 134a et un arbre de sortie 132a, solidaire en rotation respectivement d'un des deux arbres d'équipement 31, 32. De plus, l'arbre d'entrée 131a comprend une roue conique 131b, 134b entrainée par la roue conique 124 de l'arbre principal.

### 3^{ème} mode de réalisation (non revendiqué et donné à titre illustratif)

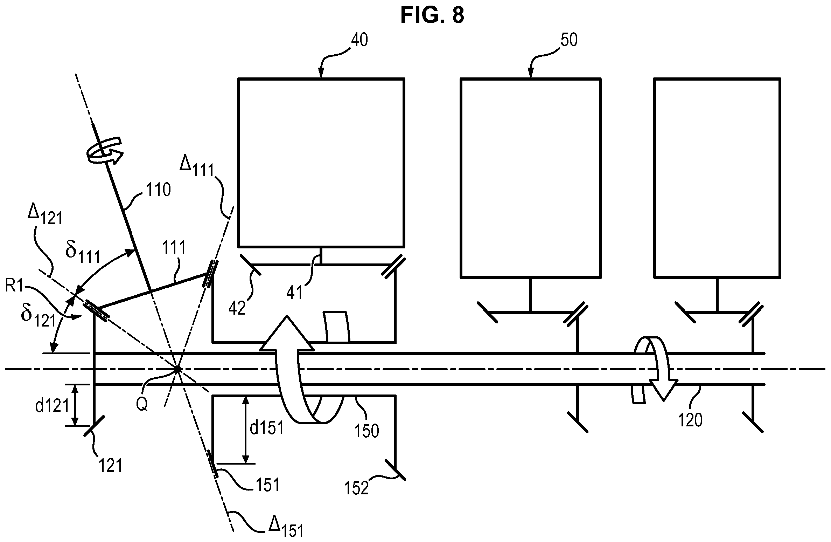

En référence à la **figure 8****,** le renvoi d'angle R1 est strictement compris entre 0 et 90°, c'est-à-dire que les axes de l'arbre de transfert 110 et de l'arbre principal 120 n'effectuent pas d'angle droit. Pour cela, l'organe d'engrènement d'attaque 111 de l'arbre de liaison 110 est une roue conique d'angle primitif δ₁₁₁ et l'organe d'engrènement de réception 121 de l'arbre principal est une roue conique d'angle primitif δ₁₂₁ et de diamètre d₁₂₁. On rappelle que l'angle primitif est défini par rapport l'arbre sur lequel la roue conique est montée.
Les angles primitifs δ₁₁₁, δ₁₂₁ définissent des axes Δ₁₁₁, Δ₁₂₁ qui sont concourant en un point Q.
L'arbre de liaison 110 est situé en biais par rapport à l'arbre principal 120, ce qui signifie que la somme des angles primitifs δ₁₁₁ + δ₁₂₁ n'est pas égale à 90°.
Dans ce mode de réalisation, un arbre secondaire 150, concentrique à l'arbre principal 120, est monté. Cet arbre secondaire 150 comprend une première roue conique 151 de diamètre d₁₅₁ qui est engrenée aussi par la roue conique 111 de l'arbre de liaison 110. Pour des raisons de géométrie, l'axe Δ₁₅₁ défini par l'angle primitif δ₁₅₁ passe par le point Q aussi.
Due à la non-orthogonalité de l'arbre de liaison 111 et de l'arbre principal 120, le diamètre d₁₂₁ est inférieur au diamètre d₁₅₁. Par conséquent, étant donné que les roues coniques 121,151 engrènent sur une pièce d'engrènement commune - la roue conique 111, les vitesses de rotation de l'arbre principal 120 et de l'arbre secondaire 150 sont différentes. On remarquera aussi que les sens de rotation sont différents.
L'arbre secondaire 150 comprend au moins une deuxième roue conique 152, qui alimente un équipement 40 via l'arbre d'équipement 41 et une roue conique 42 sur ledit arbre 41. Dans le cas présent, l'équipement 40 ne nécessite qu'une seule vitesse d'alimentation.
De façon complémentaire, l'arbre principal 120 comprend au moins une autre roue conique 125 qui engrène un autre équipement 50.
Ainsi, l'architecture présentée permet d'obtenir des vitesses différentes pour alimenter différents équipements.

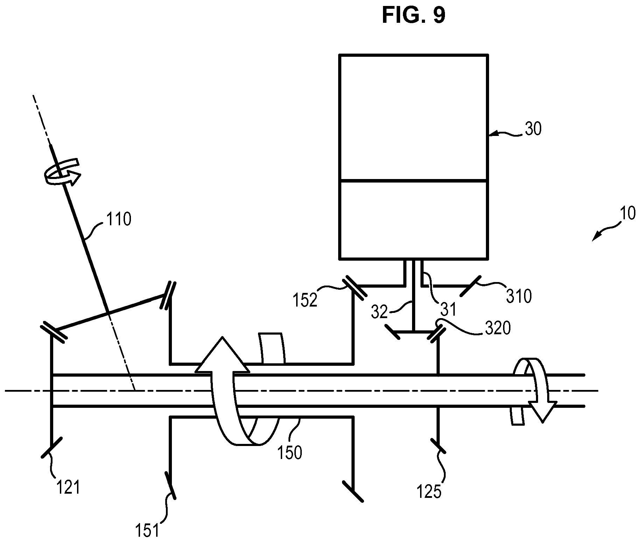

Selon une variante du troisième mode de réalisation, l'équipement 30 tel que défini dans le premier mode de réalisation peut être alimenté par le troisième mode de réalisation. Comme représenté sur la **figure 9**, dans cette variante, la roue conique 152 de l'arbre secondaire 150 engrène la roue conique 310 de l'arbre d'équipement 31 et la roue conique 125 de l'arbre principal engrène la roue conique 320 de l'arbre d'équipement 32.
De cette façon, le troisième mode de réalisation permet aussi d'alimenter un équipement nécessitant deux vitesses d'entrée.

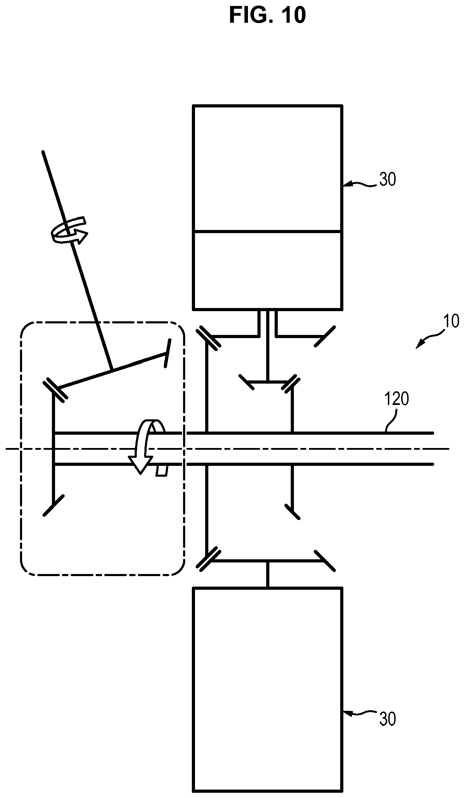

Dans la description qui précède, chaque roue conique de l'arbre principal 120 n'entraine qu'un seul équipement 30, 40, 50. Pour des raisons d'optimisation de place et d'encombrement, chaque roue conique de l'arbre principal 120 peut entrainer plusieurs équipements, en les disposant autour de l'arbre, soit à des intervalles angulaires réguliers (entre 30° et 180° par exemple, voir **figures 3** **et** **10**) *via* un multi-engrènement.

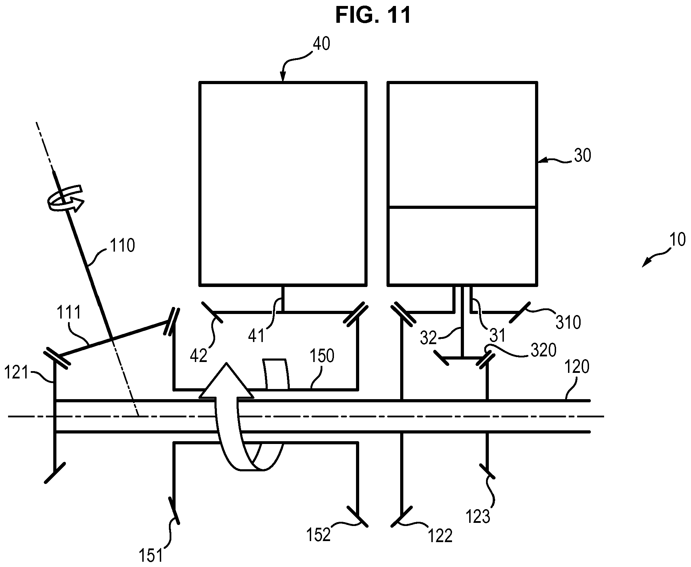

Enfin, les trois modes de réalisation ne sont pas exclusifs et peuvent être implémentés soit deux à deux, soit tous les trois sur un même AGB 10. La **figure 11** représente par exemple ainsi les premier et troisième modes de réalisation (avec les deux variantes) sur un même AGB 10.

Avantageusement, les roues coniques utilisées pour entrainer les différents éléments sont des roues spiro-coniques, ou bien des roues de type Zérol®, ou bien des roues hypoïdes, ou plus généralement des engrenages hélicoïdaux.
Des combinaisons de différents types d'engrenages peuvent être envisagées, en fonction du type de transfert de puissance, des vitesses de rotation et des contraintes mécaniques.

## Revendications

1. Ensemble comprenant un boîtier d'entrainement des accessoires (10) d'un aéronef (1) et un équipement (30) choisi parmi une pompe à carburant multi-étages ou un groupe de lubrification multi-étages,
ledit boitier (10) étant adapté pour transmettre la puissance d'un groupe propulsif (20) de l'aéronef à l'équipement (30),
le boitier (10) comprenant :
∘ Un arbre de liaison (110), adapté pour être entrainé par le groupe propulsif (20),
∘ Un arbre principal (120), adapté pour être entrainé par l'arbre de liaison (110),
∘ Deux roues coniques (122, 123) solidaires de l'arbre principal (120), lesdites roues ayant des diamètres (d₁₂₂, d₁₂₃) différents,
l'équipement (30) comprenant :
∘ un arbre d'équipement haute vitesse (31) comprenant une roue conique (310),
∘ un arbre d'équipement basse vitesse (32), comprenant une roue conique (320),
**caractérisé en ce que** chaque roue (310, 320) des arbres d'équipement (31, 32) est engrenée respectivement par une des deux roues coniques (122, 123) de l'arbre principal (120), de sorte que les deux arbres d'équipement (31, 32) tournent à des vitesses différentes l'une par rapport à l'autre.

2. Ensemble selon la revendication précédente, dans lequel les roues coniques (122, 123) sont placées en vis-à-vis, de sorte que l'entrainement des deux arbres d'équipement (31, 32) se fasse en sens contraire.

3. Ensemble selon la revendication précédente, dans lequel l'arbre de liaison (110) est en biais par rapport à l'arbre principal (120).

4. Système comprenant un ensemble selon l'une quelconque des revendications précédentes, comprenant en outre un groupe propulsif, ledit groupe propulsif entrainant l'arbre de liaison (110).

5. Ensemble ou système selon l'une quelconque des revendications précédentes, comprenant au moins deux équipements (30, 40, 50) les deux équipements (30, 40, 50) étant entrainés par des mêmes roues coniques du boitier (10).

6. Ensemble ou système selon l'une quelconque des revendications précédentes, dans lequel au moins une roue conique est une roue spiro-conique, ou bien hypoïde.

7. Aéronef comprenant un système selon la revendication précédente, dans lequel le groupe propulsif (20) est un turbopropulseur.

## Patentansprüche

1. Einheit, umfassend ein Getriebe der Hilfsgeräte (10) eines Fluggeräts (1) und eine Ausrüstung (30), ausgewählt aus einer mehrstufigen Kraftstoffpumpe oder einer mehrstufigen Schmiergruppe,
wobei das Getriebe (10) ausgebildet ist, um die Kraft einer Antriebsgruppe (20) des Fluggeräts an die Ausrüstung (30) zu übertragen,
wobei das Getriebe (10) umfasst:
∘ eine Verbindungswelle (110), die ausgebildet ist, um von der Antriebsgruppe (20) angetrieben zu sein,
∘ eine Hauptwelle (120), die ausgebildet ist, um von der Verbindungswelle (110) angetrieben zu sein,
∘ zwei konische Räder (122, 123), die mit der Hauptwelle (120) fest verbunden sind, wobei die Räder unterschiedliche Durchmesser (d₁₂₂, d₁₂₃) haben,
wobei die Ausrüstung (30) umfasst:
∘ eine Hochgeschwindigkeits-Ausrüstungswelle (31), umfassend ein konisches Rad (310),
∘ eine Niedriggeschwindigkeits-Ausrüstungswelle (32), umfassend ein konisches Rad (320),
**dadurch gekennzeichnet, dass** in jedes Rad (310, 320) der Ausrüstungswellen (31, 32) jeweils eins der zwei konischen Räder (122, 123) der Hauptwelle (120) derart eingreift, dass die zwei Ausrüstungswellen (31, 32) mit voneinander unterschiedlichen Geschwindigkeiten drehen.

2. Einheit nach vorangehendem Anspruch, wobei die konischen Räder (122, 123) derart gegenüber platziert sind, dass der Antrieb der zwei Ausrüstungswellen (31, 32) in die entgegengesetzte Richtung erfolgt.

3. Einheit nach vorangehendem Anspruch, wobei die Verbindungswelle (110) in Bezug auf die Hauptwelle (120) schräg ist.

4. System, umfassend eine Einheit nach einem der vorangehenden Ansprüche, umfassend ferner eine Antriebsgruppe, wobei die Antriebsgruppe die Verbindungswelle (110) antreibt.

5. Einheit oder System nach einem der vorangehenden Ansprüche, umfassend mindestens zwei Ausrüstungen (30, 40, 50), wobei die zwei Ausrüstungen (30, 40, 50) von denselben konischen Rädern des Getriebes (10) angetrieben werden.

6. Einheit oder System nach einem der vorangehenden Ansprüche, wobei mindestens ein konisches Rad ein Palloid- oder auch Hypoid-Rad ist.

7. Fluggerät, umfassend ein System nach vorangehendem Anspruch, wobei die Antriebsgruppe (20) ein Turbotriebwerk ist.

## Claims

1. An assembly comprising an accessory gearbox (10) of an aircraft (1) and a piece of equipment (30) selected from among a multistage pump or a multistage lubrication unit,
said gearbox (10) being adapted for transmitting the power of a propulsion unit (20) of the aircraft to the piece of equipment (30), the gearbox (10) comprising:
∘ A connection shaft (110), adapted for being driven by the propulsion unit (20),
∘ A main shaft (120), adapted for being driven by the connection shaft (110),
∘ Two bevel gears (122, 123) integral with the main shaft (120), said gears having different diameters (d₁₂₂, d₁₂₃),
the piece of equipment (30) comprising:
∘ a high-speed equipment shaft (31) comprising a bevel gear (310),
∘ a low-speed equipment shaft (32), comprising a bevel gear (320),
**characterized in that** each gear (310, 320) of the equipment shafts (31, 32) is meshed respectively with one of the two bevel gears (122, 123) of the main shaft (120), so that the two equipment shafts (31, 32) rotate at different speeds from each other.

2. The assembly according to the preceding claim, wherein the bevel gears (122, 123) are placed facing one another, so that driving the two equipment shafts (31, 32) occurs in opposite directions.

3. The assembly according to the preceding claim, wherein the connection shaft (110) is tilted with respect to the main shaft (120).

4. A system comprising an assembly according to any one of the preceding claims, also comprising a propulsion system, said propulsion system driving the connection shaft (110).

5. The assembly or system according to any one of the preceding claims, comprising at least two pieces of equipment (30, 40, 50), the two pieces of equipment (30, 40, 50) being driven by the same bevel gears of the gearbox (10).

6. The assembly or system according to any one of the preceding claims, wherein at least one bevel gear is a spiral bevel or hypoid gear.

7. An aircraft comprising a system according to the preceding claim, wherein the propulsion system (20) is a turboprop.
